# EUROPEAN PATENT APPLICATION

(11) **EP 2 007 032 A2**
(43) Date of publication of application: **24.12.2008**
(21) Application number: 08251726.9
(22) Date of filing: 16.05.2008
(51) Int. Cl.: H04B 7/185

(54) **System and method for globally sharing flight management system data or other files from aerial platforms or other sources anywhere in the world**

(30) Priority: 21.05.2007 US 751388
(71) Applicant: The Boeing Company, Chicago, IL 60606-2016 (US)
(72) Inventor: Derenge, Charles L., Phoenix, Arizona 85048 (US); Estkowski, Regina, Bellevue, Washington 98004 (US); Baumeister, Richard, Aurora Colorado 80016 (US)
(74) Representative: McLeish, Nicholas Alistair Maxwell

(57) **Abstract**

A system for globally sharing data or files from aerial platforms or other sources located anywhere in the world may include a satellite modem to transfer data to a satellite system for globally sharing data or files. The system may also include a data flow controller to control a flow of data to the satellite modem from at least one of an aerial platform and a data source, located anywhere in the world.

## Description

### BACKGROUND

The present invention relates to communications and transferring or sharing data, and more particularly to a system and method for globally sharing flight management system (FMS) data or sharing or transferring other data or files from aerial platforms or other sources located anywhere in the world.

FMS data may include data related to the status of an aircraft in flight, such as current geographical location, altitude, compass heading or direction of flight, air speed, destination airport, departure airport and any other related information that may be helpful in managing air traffic or for other purposes. Such FMS data may be a critical input to Air Traffic Management (ATM). Additionally, for automated ATM, such information needs to be current and accurate and needs to be shared or transmitted by reliable communications means from anywhere in the world. Thus, there is a need to share, in near real-time, streaming FMS data or other data from aerial platforms or aircraft or from other data sources from anywhere in the world.

### SUMMARY

A system for globally sharing data or files from aerial platforms or other sources located anywhere in the world may include a satellite modem to transfer data to a satellite system for globally sharing data or files. The system may also include a data flow controller to control a flow of data to the satellite modem from at least one of an aerial platform and a data source, located anywhere in the world.

A system for globally sharing data or files from aerial platforms or other sources located anywhere in the world may include a server to receive FMS data from at least one aerial platform anywhere in the world for transmission by streaming over a satellite system to a receiver at any other location in the world. The system may also include a file transfer controller to control transferring files from at least one file server for transmission over the satellite system to the receiver or another receiver at any other location in the world. The system may also include a data flow controller to control a flow of data for transmission over the satellite system and to selectively transmit streaming FMS data or files over the satellite system. The system may further include a satellite modem to transfer the streaming FMS data or files to the satellite system.

A method for globally sharing data or files from aerial platforms or other sources located anywhere in the world may include receiving data from an aerial platform located anywhere in the world. The method may also include transmitting the data via a satellite system to globally share the data from the aerial platform anywhere in the world.

A method for globally sharing data or files from aerial platforms or other sources located anywhere in the world may include receiving FMS data from an aerial platform located anywhere in the world. The method may also include selectively streaming the FMS data or transmitting a file via a satellite system to globally share the FMS data or the file anywhere in the world, wherein the FMS data is streamed for air traffic management. The method may further include transmitting the data or the file via one of a transparent or a no error correction mode and a non-transparent or an error correction mode.

Other aspects and features of the present invention, as defined solely by the claims, will become apparent to those ordinarily skilled in the art upon review of the following non-limited detailed description of the invention in conjunction with the accompanying figures.

### BRIEF DESCRIPTION OF THE SEVERAL VIEWS OF THE DRAWINGS

Figure 1 is a block diagram of an example of a system for globally sharing FMS data or other files or data from an aerial platform or other sources, located anywhere in the world, in accordance with an embodiment of the present invention.

Figures 2 is a flow chart of an example of a method for controlling a communications connection to a satellite system or satellite modem in a system for globally sharing FMS data or other files or data from aerial platforms or other sources, located anywhere in the world, in accordance with an embodiment of the present invention.

Figures 3A and 3B are flow charts of examples of methods for controlling data flow in a system for globally sharing FMS data or other files or data from aerial platforms or other sources, located anywhere in the world, in accordance with an embodiment of the present invention.

Figures 4 is a flow chart of an example of a method for controlling the transfer of files or data in a system for globally sharing FMS data or other files or data from aerial platforms or other sources, located anywhere in the world, in accordance with an embodiment of the present invention.

Figure 5 is a block diagram of an example of a system for globally sharing FMS data from an aerial platform located anywhere in the world in accordance with an embodiment of the present invention.

### DETAILED DESCRIPTION

The following detailed description of embodiments refers to the accompanying drawings, which illustrate specific embodiments of the invention. Other embodiments having different structures and operations do not depart from the scope of the present invention.

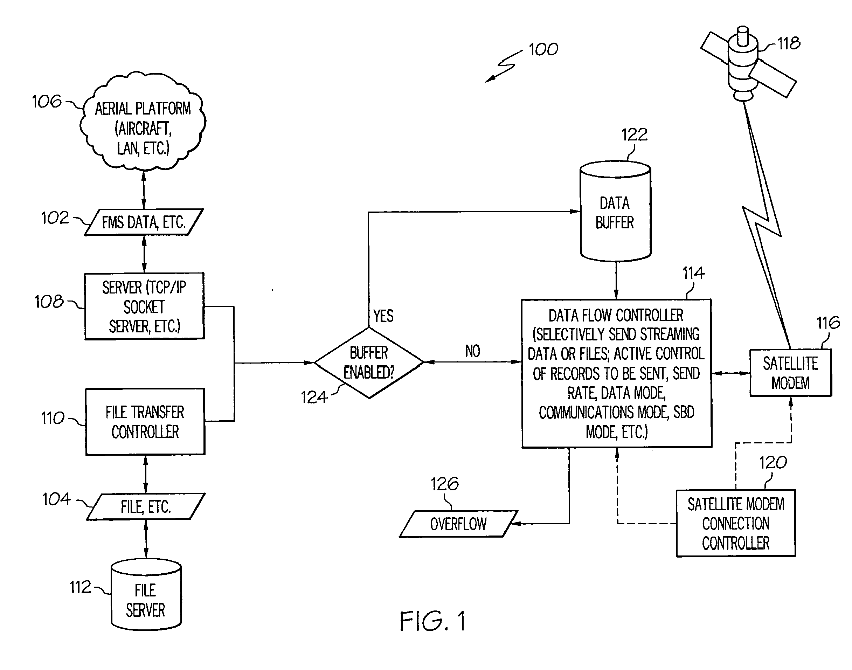

Figure 1 is a block diagram of an example of a system 100 for globally sharing FMS data 102 or other files 104 or data from an aerial platform 106 or other sources 104, located anywhere in the world, in accordance with an embodiment of the present invention. The aerial platform 106 may be an aircraft, local area network (LAN) or similar source. The FMS data 102 or other information may be transmitted to a server 108. The server 108 may be a transmission control protocol/Internet protocol (TCP/IP) socket server of other type server capable of formatting the data into a format to facilitate transmission over a network, such as the Internet or private or dedicated, secure network. The system 100 may also include a file transfer controller 110 to receive files 104 or other data from a file server 112 or other data source.

The system 100 may also include a data flow controller 114 to control a flow of data 102 to a satellite modem 116 from the server 108 and aerial platform 106 and a flow of files 104 or file transfer from the file server 112, either of which may be located anywhere in the world. The satellite modem 116 may then transfer or globally share the data 102 or files 104 with any other location anywhere in the world on a near real-time basis via a satellite system 118. The satellite system 118 may be a constellation of satellites, such as the Iridium global communications satellite system or a similar satellite arrangement for global communications. The data flow controller 114 may be adapted to selectively transmit streaming data or files using the satellite system 118 or may permit a user or operator to selectively transmit either streaming data or files using the satellite system 118.

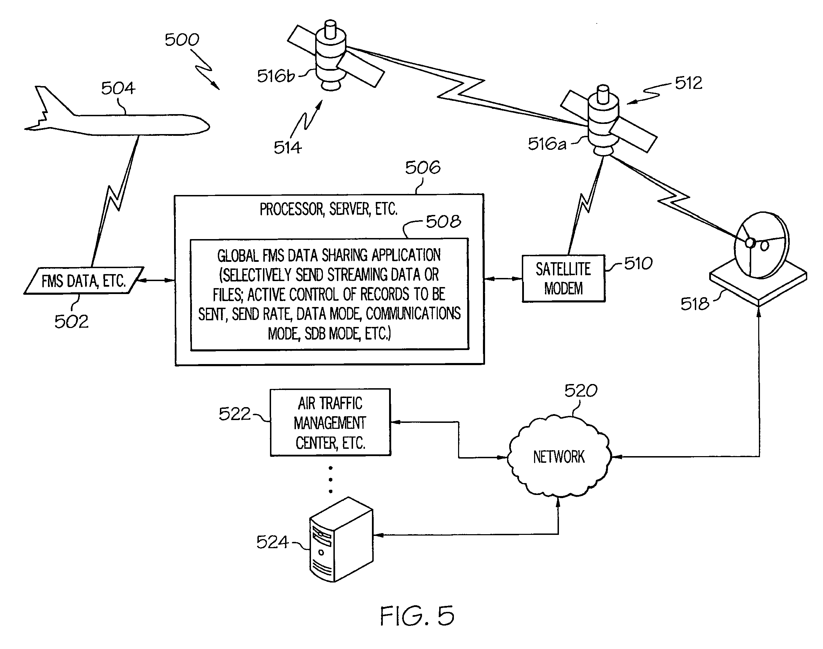

The data flow controller 114 may include features or modules to permit active control of a quantity of records to be sent; active control of a data send rate; active control of a data mode; active control of a communications mode; or active control of other modes of operation or features. Permitting active control of the data mode may include selecting or allowing a user or operator to select one of sending data through a satellite system gateway or earth station, such as that illustrated in Figure 5 or directly to a satellite transceiver. The satellite transceiver may be the modem 116 or form part of the modem 116. Presently, the satellite system 118 envisioned to be used with the system 100 of the present invention is the existing Iridium communications satellite system. Accordingly, the satellite transceiver may be an Iridium L-Band transceiver or similar transceiver compatible with the Iridium system.

Permitting active control of the communications mode may include selecting or allowing a user to select one of a transparent mode (no error correction communications mode) or a non-transparent (error corrections communications mode).

The system 100 or data flow controller 114 may also support and permit control of a short burst data (SBD) mode feature which is available with the Iridium satellite system.

The system 100 may include a satellite modem connection controller 120 to control the communications connection between the data flow controller 114 and the satellite modem 116. The respective control signaling connections or paths between the satellite modem connection controller 120 and the data flow controller 114 and between the modem connection controller 120 and satellite modem 116 are illustrated by a broken line or arrow in Figure 1. The other solid arrows connecting the different elements of the system 100 illustrate data paths.

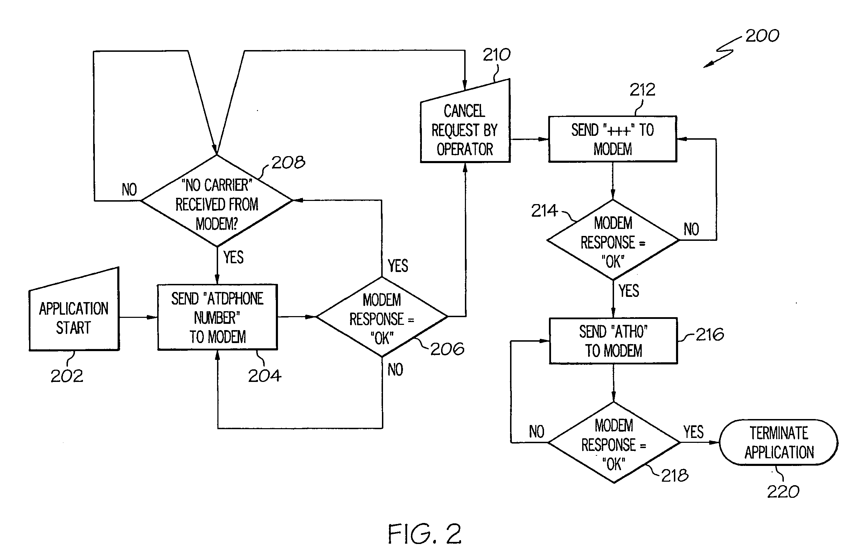

The satellite modem connection controller 120 may perform a group of functions including but not necessarily limited to establishing a data path connection through the satellite modem 116 to the satellite system 118; detecting if the data path connection is lost; re-establishing the data path connection in response to detecting that the connection is lost; and terminating a data transfer process in response to a request from a user or operator. An example of a method for controlling a communications connection to the satellite system 118 or Iridium satellite system will be described in more detail with reference to Figure 2.

The system 100 may also include a data buffer 122 to compensate for any difference in data rate bandwidth from the aerial platform 106 and server 108 and the satellite modem 116 and satellite system 118. The buffer 122 may store data until the satellite modem 116 can transmit the data or files to the satellite system 118. A determination may be made in block 124 if the buffering feature is enabled. If so, any data or files that cannot be currently transmitted by the satellite modem 116 to the satellite system 118 may be directed to the data buffer 122 for storage. Because the current or most up-to-date data is most important, particularly in an ATM environment, the oldest data may be discarded or sent to an overflow 126.

The system 100 may be modified or adapted to test different combinations of available satellite system services or Iridium satellite system services and to determine an optimal set of services based on the data or files being transmitted, the operating environment and other parameters.

Figures 2 is a flow chart of an example of a method 200 for controlling a communications connection to a satellite system or satellite modem in a system for globally sharing FMS data or other files or data from aerial platforms or other sources, located anywhere in the world, in accordance with an embodiment of the present invention. The method 200 may be embodied in or performed by the satellite modem connection controller 120 in Figure 1. In block 202 the application may start. In block 204, an attention dial phone number (ATDphone number) signal may be sent to the modem. In block 206, a determination may be made if an "OK" response or the like has been received from the modem. If not, the method 200 may return to block 204 and another ATDphone number signal may be sent to the modem. If the modem returns an "OK" response in block 206, the method 200 may advance to block 208.

In block 208, a determination may be made whether a "no carrier" signal or similar signal was received from the modem. If not, the method 200 may loop around until a cancel request 210 by an operator or user is received. If a "no carrier" was received in block 208, the method 200 may return to block 204 and the method 200 may proceed as previously described.

In response to a cancel request by the operator 210, the method 200 may advance to block 212. In block 212 a send "+++" signal may be send to the modem. As is known in modem communications, a "+++" signal refers to a command sent to the modem to cause the modem to leave a data mode for transmitting data and to enter a command mode to receive a command. In block 214, a determination may be made whether an "OK" response was received from the modem in response to the "+++" signal. If not, the method 200 may return to block 212 and another "+++" signal may be sent to the modem. If an "OK" modem response was received in block 214, the method 200 may advance to block 216. In block 216, an "ATH0" signal, hang up call or similar signal may be sent to the modem to indicate a termination in the transmission of data. In block 218, a determination may be made if an "OK" response was received by the modem. If not, the method 200 may return to block 216 and another "ATH0" signal may be sent to the modem, If an "OK" response was received in block 218 in response to the "ATH0" signal, the application may terminate at termination 220.

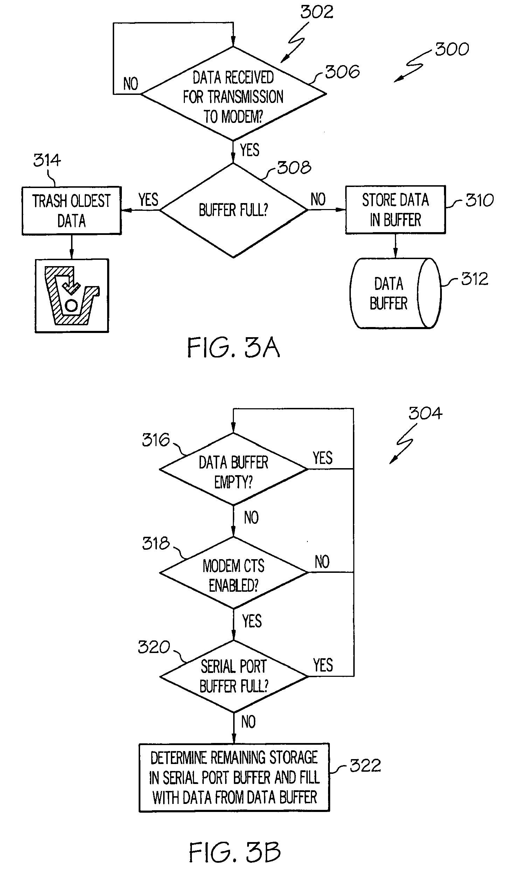

Figures 3A and 3B are flow charts of examples of methods 300 for controlling data flow in a system for globally sharing FMS data or other files or data from aerial platforms or other sources, located anywhere in the world, in accordance with an embodiment of the present invention. Figure 3A illustrates an exemplary method 302 for entering data in a buffer, such as buffer 122 in Figure 1, and Figure 3B illustrates an example of a method 304 for removing data from the buffer. The methods 302 and 304 may be embodied in or performed by the data flow controller 114 in Figure 1. Beginning with method 302 for entering data into the buffer, in block 306, a determination may be made whether data has been received for transmission to the modem. If not, the method 302 may loop back until data is received for transmission to the modem. The method 302 may advance to block 308 in response to a determination being made in block 306 that data has been received for transmission to the modem.

In block 308, a determination may be made if the buffer is full. If not, data may be stored in the buffer 312 in block 310. The buffer 312 may be the same or similar to the buffer 122 in Figure 1.

If the determination is made in block 308 that the buffer is full, the method 302 may advance to block 314. In block 314, the oldest data may be discarded or trashed.

Referring now to the exemplary method 304 of Figure 3B for removing data from the buffer, in block 316, a determination may be made whether the data buffer is empty. If the data buffer is empty, the method 304 may enter a loop until the buffer contains data. The method 304 may advance to block 318 in response to a determination that the buffer is not empty in block 316. In block 318, a determination may be made whether the modem clear to send is enabled. In other words, is the modem ready to receive and transmit data to the satellite system? If not, the method 304 may loop back to block 316 and the method 304 may continue as previously described. If the determination is made in block 318 that the modem clear to send has been enabled, the method 304 may proceed to block 320. In block 320, a determination may be made if the serial port buffer is full. The data flow controller may be embodied on a personal computer (PC) and the serial port buffer in this context refers to the serial port buffer on the PC on which the data flow controller may be embodied. If the serial port buffer is full, the method 304 may return to block 316 and the method 304 may continue as previously described. If the serial port buffer is determined to not be full in block 320, the method 304 may proceed to block 322. In block 322, any remaining storage in the serial port buffer may be determined and the serial port buffer may be filled with data from the data buffer.

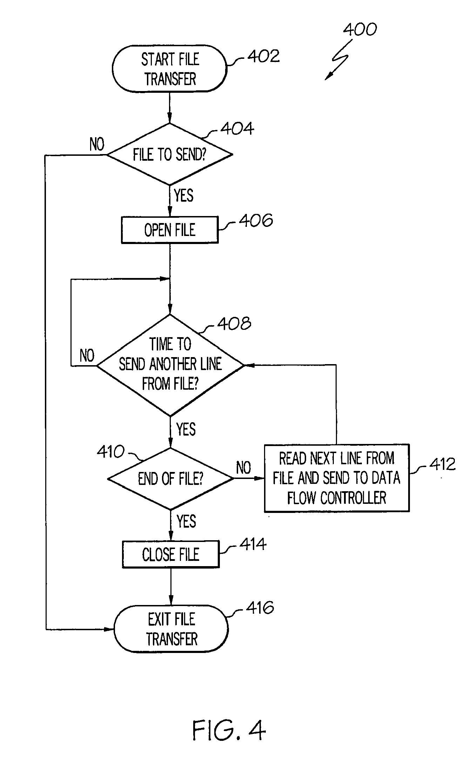

Figures 4 is a flow chart of an example of a method 400 for controlling the transfer of files or data in a system for globally sharing FMS data or other files or data from aerial platforms or other sources, located anywhere in the world, in accordance with an embodiment of the present invention. The method 400 may be embodied in or performed by the file transfer controller 110 of Figure 1. In block 402, the file transfer method 400 may be started. In block 404, a determination may be made if there is a file to send. If not, the file transfer method 400 may be exited or terminated in block 416.

If a determination is made in block 404 that there is a file to send, the method 400 may advance to block 406 and the file may be opened. In block 408, a determination may be made whether it is time to send another line from the file. If not, the method 400 may enter a loop until it is time to send another line from the file.

In block 410, a determination may be made whether the end of the file has been reached. If not, the method 400 may advance to block 412. In block 412, a next line may be read from the file and sent to the data flow controller. The method 400 may then return to block 408 and the method may proceed as previously described. Accordingly, the file may be transferred on a line-by-line basis by the file transfer controller 110 to the data flow controller 114.

If a determination is made in block 410 that the end of the file has been reached, the method 400 may advance to block 414 where the file may be closed. The method 400 may be terminated or exited in block 416.

Figure 5 is a block diagram of an example of a system 500 for globally sharing FMS data from an aerial platform located anywhere in the world in accordance with an embodiment of the present invention. The system 500 may be embodied or integrated into the system 100 of Figure 1. Flight Management System (FMS) data 502 or other data from an aerial platform 504 may be received by a processor 506, server or other computing device. A global FMS data sharing application or module 508 may be operable on the processor 506. The FMS data may be transferred to the processor 506 or global FMS data sharing application 508 in TCP/IP protocol at a data rate of about 100 Megabits per second (Mbps).

The global FMS data sharing application or module 508 may perform similar functions to those described with respect to the data flow controller 114 of Figure 1. For example, the module 508 may selectively send streaming FMS data or files to a satellite modem 510 for transmission via a satellite system 512 to a location anywhere in the world. The module 508 may also perform functions such as actively controlling or permitting active control of records or data to be sent; actively controlling or permitting active control of a send data rate, a data mode, a communications mode and a SDB mode similar to that previously described with respect to the data flow controller 114 of Figure 1, as well as other operations or functions that may permit global sharing of FMS data or other data or files with other locations anywhere in the world on a near real-time basis.

The processor 506 or FMS data sharing application 508 may transfer data to the satellite modem at a data rate of about 19.2 kilobits per second (kbps) and may be transferred using an RS232 type interface or other suitable interface. The satellite modem may transfer data to the satellite system 512 at a data rate of about 2.5 kbps. The satellite system 51 2 may be a constellation of satellites 514. The system 500 may be configured to communicate using the existing Iridium satellite system. The data may then be transferred to the satellite system 512 using the Iridium L-band receiver protocol (ILRP) or other similar or compatible protocol.

The data may be transferred between satellites 516 and may eventually be transmitted to an earth station 518 or satellite gateway. The earth station 518 may transfer the data via a network 520 to an air traffic management center (ATC) 520 or other facility for automated air traffic management or for other purposes. The network 520 may be the Internet or other private or dedicated secure network. The data may also be sent to other facilities 524, servers or the like for other purposes, such as analysis of the data and testing of the system 500 with the satellite system 512 or Iridium satellite system. The system 500 may be modified or adapted to test different combinations of available satellite system services, such as services available on the Iridium satellite system and to determine an optimal set of services based on the data or files being transmitted, the operating environment and other parameters.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," and "includes" and/or "including" when used in this specification, specify the presence of stated features, integers, steps, operations, elements, and/or components, but do not preclude the presence or addition of one or more other features, integers, steps, operations, elements, components, and/or groups thereof.

Although specific embodiments have been illustrated and described herein, those of ordinary skill in the art appreciate that any arrangement which is calculated to achieve the same purpose may be substituted for the specific embodiments shown and that the invention has other applications in other environments. This application is intended to cover any adaptations or variations of the present invention. The following claims are in no way intended to limit the scope of the invention to the specific embodiments described herein.

## Claims

1. A system for globally sharing data or files from aerial platforms or other sources located anywhere in the world, comprising:
a satellite modem (116, 510) to transfer data to a satellite system (118, 512) for globally sharing data or files; and
a data flow controller (114, 506) to control a flow of data to the satellite modem from at least one of an aerial platform (106, 504) and a data source (112, 524), located anywhere in the world.

2. The system of claim 1, wherein the data flow controller is adapted to selectively transmit streaming data or files using the satellite system.

3. The system of claim 1, wherein the data flow controller comprises:
a module (508) to actively control a quantity of records to be sent;
a module to actively control a data send rate;
a module to actively control a data mode;
a module to actively control a communications mode; and
a module to actively control a short burst data mode,
wherein actively controlling the data mode comprises selecting one of sending data through a satellite system gateway or directly to a satellite system transceiver, and
wherein actively controlling the communications mode comprises selecting one of a transparent or no error correction communications mode and a non-transparent or error correction communications mode.

4. The system of claim 1, wherein the data flow controller is adapted to test different combinations of available satellite system services to determine an optimal set of services based the data or files being transmitted.

5. The system of claim 1, further comprising a server (108, 502) to receive flight management system "FMS" data from the aerial platform and to transfer the FMS data to the data flow controller, wherein the server comprises a transmission control protocol/internet protocol "TCP/IP" socket server.

6. The system of claim 1, further comprising a buffer (122, 312) to compensate for any difference in data rate bandwidth from the aerial platform and the satellite modem and to store data until the satellite modem can transmit the data to the satellite system, wherein the data flow controller is adapted to discard any data that is oldest in the buffer.

7. The system of claim 1, further comprising a file transfer controller (110) to the transfer files from a file server (112) to the data flow controller (114), wherein the file transfer controller is adapted to send any files to be transferred line by line to the data flow controller.

8. The system of claim 1, further comprising a satellite modem connection controller (120), wherein the satellite modem controller is adapted to perform a group of functions including establishing a data path connection through the satellite modem to the satellite system; detecting if the data path connection is lost; re-establishing the data path connection in response to detecting that the connection is lost; and terminate a data transfer process in response to a request.

9. The system of claim 1, wherein the aerial platform comprises an aircraft in flight.

10. The system of claim 1, wherein the data from the aerial platform is streamed near real-time for air traffic management.

11. A method for globally sharing data or files from aerial platforms or other sources located anywhere in the world, comprising:
receiving flight management system "FMS" data from an aerial platform (106, 512) located anywhere in the world;
selectively streaming the FMS data or transmitting a file via a satellite system (118, 512) to globally share the FMS data or the file anywhere in the world, wherein the FMS data is streamed for air traffic management; and
transmitting the data or the file via one of a transparent or a no error correction mode and a non-transparent or an error correction mode.

12. The method of claim 11, further comprising buffering data to compensate for any difference in data rate bandwidth from the aerial platform and the satellite system and to store data until the satellite modem can transmit the data to the satellite system.

13. The method of claim 11, further comprising:
controlling a quantity of records to be sent;
controlling a data send rate;
controlling a data mode; and
controlling a communications mode.

14. The method of claim 11, wherein receiving the FMS data comprises receiving the data from the aerial platform by a transmission control protocol/internet protocol "TCP/IP" socket server (108).
